# EUROPÄISCHE PATENTSCHRIFT

(11) **EP 0 644 720 B1**
(45) Veröffentlichungstag und Bekanntmachung des Hinweises auf die Patenterteilung: **11.12.1996**
(21) Anmeldenummer: 93909894.3
(22) Anmeldetag: 05.05.1993
(51) Int. Cl.: A23J 1/20, A23J 3/08

(54) **TEILDENATURIERTES MOLKENPROTEINPRODUKT**
PARTLY DENATURIZED WHEY-PROTEIN PRODUCT
PRODUIT PARTIELLEMENT DENATURE A BASE DE PROTEINES DE PETIT-LAIT

(30) Priorität: 10.06.1992 DE 4218921; 21.04.1993 DE 4313014
(43) Veröffentlichungstag der Anmeldung: 29.03.1995
(73) Patentinhaber: DANMARK PROTEIN A/S, 6920 Videbaek (DK)
(72) Erfinder: HOLST, Hans Henrik, DK-6920 Videbaek (DK); CHRISTENSEN, Arne, DK-7400 Herning (DK); ALBERTSEN, Kristian, DK-6920 Videbaek (DK); DAUGAARD, Jensen Lars, DK-7120 Vejle Ost (DK); CLAUSEN, Pedersen Mads, DK-7400 Herning (DK); THOMSEN, Brian, DK-7500 Holstebro (DK); RASCHE, Helmer, D-3167 Burgdorf (DE); HARTMANN, Ulrich, D-3430 Witzenhausen (DE)
(74) Vertreter: Wetke, Ellen
(86) Internationale Anmeldenummer: EP9301093
(87) Internationale Veröffentlichungsnummer: WO9325086

(56) Entgegenhaltungen:
- EP-A- 0 041 346
- EP-A- 0 186 233
- EP-A- 0 347 237
- WO-A-92/20239
- FR-A- 2 354 715
- GB-A- 2 063 273

## Beschreibung

Die vorliegende Erfindung betrifft ein teildenaturiertes Molkenproteinprodukt mit guten organoleptischen Eigenschaften, welches als Zusatzstoff zu Lebensmitteln verwendet werden kann, und dessen Herstellung.

Molke fällt als flüssiges Abfallprodukt bei der Käserei und der Caseinherstellung an. Neben der darin gelösten Lactose enthält die Molke noch weitere gelöste Bestandteile, wie Molkenproteine, Mineralsalze, Milchsäure und Reste von Fett bzw. Lipiden und Nichtproteinstickstoff-Verbindungen.

In industriell angewandten Verfahren der Molkeaufbereitung zur Gewinnung verschiedener wertvoller Molkeninhaltstoffe wird Molke im allgemeinen zunächst durch Membranultrafiltration in eine proteinreiche Retentatfraktion und eine lactosereiche Permeatfraktion getrennt. Letztere kann zur Lactosegewinnung weiterverarbeitet werden. Aus dem proteinangereicherten Retentat kann ein natives, nicht denaturiertes Molkenproteinkonzentrat durch weiteres Konzentrieren und/oder Sprühtrocknen gewonnen werden. Native Molkenproteinkonzentrate können als Lebensmittel- und Futtermittelzusätze verwendet werden. So kann nicht denaturiertes Molkenproteinkonzentrat beispielsweise Lebensmitteln, z.B. Stärkungsgetränken, zur Proteinanreicherung zugesetzt werden. Molkenproteinkonzentrate können als emulgierende Bestandteile und Ei-Ersatzstoffe in emulgierten Nahrungsmitteln wie Mayonnaisen und Salatsoßen eingesetzt werden. In derartigen kalt hergestellten Emulsionen können native Molkenproteinkonzentrate zwar ähnliche emulgierende Effekte wie Eigelb haben, doch fehlen den so hergestellten Emulsionen die Konsistenz und das angenehm kremige Geschmacksgefühl der mit Eigelb hergestellten Produkte, so daß die Qualität derartiger Produkte nicht zufriedenstellend ist.

Molkenproteine können auch in denaturierter Form als Zusatzstoffe zu Lebensmitteln und Futtermitteln verwendet werden. Denaturierte Molkenproteinprodukte können z.B. durch Hitzedenaturierung von Molke oder proteinreichen Molkenfraktionen in schwach saurem pH-Bereich und anschließende Abtrennung der denaturierten Proteine durch Zentrifugieren oder Sprühtrocknen gewonnen werden. Dabei werden je nach Art der Isolierung denaturierte Proteine mit mittleren Partikelgrößen zwischen 25 und 200 µm erhalten. Diese denaturierten Molkenproteine können z.B. als Magermilchersatz in der Lebensmittelindustrie, z.B. der Backwarenindustrie, verwendet werden. Derartige denaturierte Molkenproteine haben jedoch den Nachteil, daß sie den damit hergestellten Lebensmitteln ein sandiges, griesiges Geschmacksgefühl verleihen. Ein derartiger sandiger Geschmack ist natürlich in Emulsionen wie Mayonnaisen, Salatsoßen und Speiseeis besonders unerwünscht. In dem EP-Patent Nr. 0 250 623 wird ein Makrokolloid aus denaturiertem Molkenprotein mit Teilchengrößen im Bereich von 0,1 -2,0 µm und dessen Herstellung beschrieben, und es wird angegeben, daß zur Vermeidung eines sandigen Geschmacksgefühls und zur Erzielung fettartiger organoleptischer Eigenschaften eine derart geringe Teilchengröße des denaturierten Molkenproteins notwendig ist.

Der vorliegenden Erfindung liegt die Aufgabe zugrunde, neue Molkenproteinprodukte mit einem hohen Proteingehalt und guten organoleptischen Eigenschaften zur Verwendung als Lebensmittelzusatzstoffe zu entwickeln, welche insbesondere als Bestandteile von kalt hergestellten Emulsionen wie Mayonnaisen, Salatsoßen, Brät und Speiseeis geeignet sind.

Es wurde nun gefunden, daß die neuen teildenaturierten Molkenproteinprodukte ausgezeichnete organoleptische Eigenschaften besitzen und sich gut als emulgierende und viskositätserhöhende Bestandteile von Emulsionen wie Mayonnaisen und Dressings eignen.

Die vorliegende Erfindung betrifft daher ein neuartiges teildenaturiertes Molkenproteinprodukt mit einem Proteingehalt** von 65 - 95 Gew.-% Protein bezogen auf Trockensubstanz***, einem Denaturierungsgrad des Proteins von 55 - 80 % und mit einem mittleren Teilchendurchmesser* im Bereich von 30 - 60, insbesondere 40 - 50 µm.
** Gesamtprotein, inklusive NPN, bestimmt nach der Stickstoff-Bestimmungsmethode nach Kjeldahl und berechnet als Gew.-% Stickstoff x 6.38.
*** Trockensubstanzgehalt bestimmt durch Trocknen bei 102°C bis zur Gewichtskonstanz.
* Teilchendurchmesser und Teilchengrößenverteilung in Suspension des Molkenproteinprodukt-Pulvers in Ethanol mit einem Laser Scanner bestimmt.

Das Molkenproteinprodukt wird im allgemeinen als Pulver vorliegen, wie es beispielsweise nach einer Sprühtrocknung anfällt, und kann dann einen Feuchtigkeitsgehalt von höchstens 6 Gew.-%, z.B. einen Wassergehalt zwischen 3 und 6, insbesondere 5 und 6 Gew.-% aufweisen.

Bei dem erfindungsgemäßen Molkenproteinprodukt liegt vorzugsweise eine Teilchengrößenverteilung* vor, bei der mindestens 50 % der Teilchen einen Teilchendurchmesser im Bereich von 20 - 70 µm besitzen, wobei weniger als 10 % der Teilchen Teilchendurchmesser von unter 10 µm und weniger als 1 % der Teilchen Teilchendurchmesser von unter 5 µm besitzen und weniger als 10 % der Teilchen Teilchendurchmesser von über 100 µm und weniger als 1 % der Teilchen Teilchendurchmesser von über 200 µm besitzen.

Der Proteingehalt des Produktes ist sehr hoch und liegt zwischen 65 und 95, insbesondere 70 und 95 Gew.-% bezogen auf Trockensubstanz. So kann der Proteingehalt zweckmäßig zwischen 75 und 85, vorzugsweise zwischen 80 und 84 Gew.-% bezogen auf Trockensubstanz betragen.

Der Denaturierungsgrad beträgt 55 - 80 %, das heißt, daß 55 - 80 Gew.-% des gesamten Molkenproteins als denaturiertes Protein**** vorliegen. Vorzugsweise beträgt der Denaturierungsgrad des Molkenproteinproduktes 60 - 75 %, insbesondere ca. 70 ± 2 %.
**** Als denaturiertes Protein wird derjenige Anteil des Proteins bestimmt, welcher bei pH 4,6 als Niederschlag ausfällt.

Neben dem teilnaturierten Molkenprotein kann das Molkenproteinprodukt noch Lactose in Mengen von bis zu 20 Gew.-% bezogen auf Trockensubstanz enthalten. Der Lactosegehalt kann in Abhängigkeit von dem Proteingehalt des Produktes variieren und kann beispielsweise zwischen 0,5 und 20 Gew.-%, vorzugsweise 3 - 6 Gew.-%, bezogen auf Trockensubstanz betragen. Auch Milchfette können noch in Mengen von bis zu 17 Gew.-%, insbesondere 5 - 8 Gew.-%, bezogen auf Trockensubstanz enthalten sein. Ferner kann das Molkenproteinprodukt noch wertvolle Mineralsalze der Molke in Mengen entsprechend einem Aschegehalt von 2 - 6, vorzugsweise unter 4, Gew.-% bezogen auf Trockensubstanz enthalten. Wertvolle Nichtproteinstickstoffverbindungen (= NPN*****) können in Mengen zwischen 4 und 8 Gew.-% bezogen auf Trockensubstanz enthalten sein.
***** Als NPN wird der Gehalt an Stickstoffverbindungen, welcher nicht durch 12-%ige Trichloressigsäure fällbar ist, bestimmt.

In Wasser suspendiert weist das erfindungsgemäße Molkenproteinprodukt einen pH-Wert im Bereich zwischen > 7,0 und 8,0, vorzugsweise im Bereich zwischen > 7,0 und 7,5, insbesondere zwischen 7,1 und 7,3, auf.

Erfindungsgemäß kann das teildenaturierte Molkenproteinprodukt erhalten werden, indem man
a) aus Molke ein proteinangereichertes, lactoseabgereichertes auf einen Trockensubstanzgehalt von 25 - 35 Gew.-% konzentriertes Molkenretentat mit einem auf 65 - 95, insbesondere 70 - 95, Gew.-% bezogen auf Trockensubstanz angereicherten Gehalt an Protein und einem auf < 20 Gew.-% bezogen auf Trockensubstanz abgereicherten Gehalt an Lactose abtrennt,
b) das erhaltene proteinangereicherte konzentrierte Molkenretentat durch Zugabe von Wasser und verdünnter Lauge in ein verdünntes Molkenretentat mit einem Trockensubstanzgehalt von 10 - 20 Gew.-% und einem pH-Wert im Bereich zwischen > 7,0 und 8,0 überführt,
c) das erhaltene verdünnte Molkenretentat auf eine unter dem Koagulationspunkt der Molkenproteine liegende Temperatur von mindestens 50°C vorerhitzt und dann durch einen Homogenisator leitet und darin während einer für die Denaturierung von 55 - 80 % des Proteingehaltes ausreichenden Verweilzeit einer durch gleichzeitiges Einleiten von Wasserdampf erzeugten denaturierenden Temperatur unter gleichzeitiger Homogenisierung aussetzt und
d) das in dem Verfahrensschritt c) erhaltene Homogenisat direkt anschließend einer Sprühtrocknung unterwirft.

Zur Herstellung des teildenaturierten Molkenproteinproduktes kann von Süß- oder Sauermolke ausgegangen werden. Der pH-Wert und die Zusammensetzung der Ausgangsmolke können je nach Herkunft der Molke leicht variieren. Im allgemeinen hat die Molke einen Trockensubstanzgehalt von etwa 4 - 6 Gew.-%. In der Trockensubstanz sind etwa 65 - 80 Gew.-% Lactose, 8 - 15 Gew.-% Proteine, 3 - 4 Gew.-% NPN-Verbindungen, 0 - 3 Gew.-% Milchfette und Mineralsalze entsprechend einem Aschegehalt von 8 - 15 Gew.-% enthalten.

In dem Verfahrensschritt a) wird die Molke nach an sich bekannten Methoden, z.B. durch Ultra-/Diafiltration in ein proteinangereichertes, lactoseabgereichertes Molkenretentat und ein proteinabgereichertes lactoseangereichertes Molkenpermeat, welches zur Lactosegewinnung weiterverarbeitet werden kann, getrennt.

Zur Abtrennung des proteinangereicherten Molkenretentats eignet sich jedes Filtersystem, welches eine geringe Durchlässigkeit für Proteine und Fett und eine hohe Durchlässigkeit für Lactose, Wasser, Mineralsalze und Säuren aufweist. Zweckmäßig ist z.B. eine Ultra-/Diafiltration unter Verwendung semipermeabler Membranen mit einer Molmassenausschlußgrenze im Bereich von 15.000 - 25.000, insbesondere ca. 20.000 Dalton. Als Membranen können an sich bekannte Polysulfon-Membranen, keramische Membranen oder Kohlenstoffmembranen eingesetzt werden. Geeignet sind insbesondere Polysulfon-Membranen mit der vorgenannten Molmassenausschlußgrenze. Die Ultrafiltration kann mit Membranmodulen unterschiedlichster Ausführungsform, z.B. Platten- oder Spiralmodulen, ausgeführt werden, wobei mehrere hintereinander geschaltete Module zu einer Trenneinrichtung zusammengefasst sein können.

Die Ultrafiltration wird unter zur Molkenultrafiltration üblichen Bedingungen durchgeführt. Zweckmäßig kann bei einem transmembralen Druck im Bereich von 4 - 6 bar und einem Volumenstrom über die Membran im Bereich von 15 - 175 l/min/m² Membranfläche gearbeitet werden. Die Ultrafiltration kann bei Temperaturen zwischen 10 und 60°C, vorzugsweise zwischen 10 und 20°C, erfolgen. Um eine möglichst hohe Anreicherung des Proteins und eine entsprechend starke Abreicherung der Lactose in dem Retentat zu erreichen, kann die Ultrafiltration ganz oder teilweise als Diafiltration unter Zugabe von Wasser, insbesondere entmineralisiertem oder dialysiertem Wasser, ausgeführt werden.

In dem Verfahrensschritt wird das Molkenretentat so weit konzentriert, daß ein Trockensubstanzgehalt von 25 - 35 Gew.-% erzielt wird. Der Proteingehalt kann dabei auf 65 - 95, insbesondere 70 - 95 Gew.-%, vorzugsweise 75 - 85 Gew.-%, bezogen auf Trockensubstanz angereichert werden. Der Lactosegehalt wird je nach gewünschtem Proteingehalt auf unter 20 Gew.-%, vorzugsweise unter 10 Gew.-%, bezogen auf Trockensubstanz abgereichert. Zur Erzielung von Produkten mit sehr hohen Proteingehalten kann der Lactosegehalt auf einen Bereich von 3 - 6 Gew.-% bezogen auf Trockensubstanz abgereichert werden.

Dabei wird das Volumen der Molkenretentatlösung auf 1 - 3 % des Volumens der eingesetzten Molke verringert.

Im Verfahrensschritt b) wird das proteinangereicherte konzentrierte Molkenretentat wieder mit Wasser, insbesondere demineralisiertem Wasser, verdünnt und durch Zugabe von verdünnter Lauge, insbesondere einer verdünnten Alkalimetallhydroxidlösung wie Natronlauge, auf einen schwach alkalischen pH-Wert, z.B. im Bereich zwischen > 7,0 und 8,0, vorzugsweise zwischen > 7,0 und 7,5, insbesondere zwischen 7,1 und 7,3, eingestellt. Dabei wird das konzentrierte Molkenretentat mit soviel Wasser vermischt, daß eine verdünnte Molkenretentatlösung mit einem Trockensubstanzgehalt im Bereich von 10 - 20, vorzugsweise 10 - 15 Gew.-%, erhalten wird.

Durch die erfindungsgemäße Kombination von im ersten Verfahrensschritt erfolgender starker Konzentrierung und Volumenverringerung bei der Molkenretentatgewinnung und anschließender Rückverdünnung gelingt es, eine problemlos weiterzuverarbeitende Molkenretentatlösung mit dem erfindungsgemäß hohen Proteingehalt in der Trockensubstanz zu erhalten.

Zur Teildenaturierung des Proteingehaltes gemäß Verfahrensschritt c) wird das verdünnte Molkenretentat zunächst auf eine unter dem Koagulationspunkt der Molkenproteine liegende Temperatur von mindestens 50°C, beispielsweise eine Temperatur von 50 - 75°C, insbesondere ca. 60°C, vorerhitzt. Durch eine in an sich bekannter Weise durchgeführte Entgasung der Lösung vor dem Erhitzen kann die Viskosität günstig beeinflußt werden.

Der Proteingehalt des vorerhitzten verdünnten Molkenretentats wird sodann durch Hitze unter homogenisierenden Bedingungen teildenaturiert, indem man das verdünnte vorerhitzte Molkenretentat durch einen Homogenisator leitet, in welchem es während einer zur Erzielung des gewünschten Denaturierungsgrades ausreichenden Verweilzeit unter gleichzeitiger Homogenisierung auf denaturierend wirkende Temperaturen erhitzt wird.

Die Teildenaturierung findet bei Temperaturen von mindestens 70°C, beispielsweise Temperaturen zwischen 75 und 98°C, vorzugsweise zwischen 80 und 90°C statt. Die Erhitzung erfolgt in dem Homogenisator durch Einführen von Wasserdampf direkt in das zu denaturierende Molkenretentat.

Die Hitzeteildenaturierung kann in an sich bekannten Homogenisatoren durchgeführt werden, sofern diese zur gleichzeitigen Einführung von Wasserdampf ausgerüstet sind und eine genügend starke Homogenisierungswirkung entfalten, um die Bildung von größeren Aggregaten mit über dem vorstehend angegebenen Bereich liegenden mittleren Teilchendurchmessern während der Hitzedenaturierung zu vermeiden. Insbesondere eignen sich Homogenisatoren, in denen das durchlaufende Gut hohen mechanischen Scherwirkungen ausgesetzt ist, beispielsweise aus dem US-Patent Nr. 4 744 521 bekannte Homogenisatoren. Um die benötigte Verweilzeit des verdünnten Molkenretentats unter den Denaturierungsbedingungen einzustellen, wird das verdünnte Molkenretentat zweckmäßig im Kreislauf durch eine den Homogenisator enthaltende Rohrschleife gepumpt. Die Durchflußgeschwindigkeit des Gutes durch die Rohrleitung muß dabei ausreichend hoch gehalten werden, um Ablagerungen an den Rohrwänden zu vermeiden und eine ausreichend geringe Viskosität der pseudoplastischen Flüssigkeit sicherzustellen. Dies wird im allgemeinen gewährleistet, wenn die Durchflußgeschwindigkeit mindestens 2 m/s beträgt.

Die Haltezeit des verdünnten Molkenretentats unter denaturierenden Bedingungen wird so gewählt, daß ein Denaturierungsgrad des Molkenproteins von 55 - 80 %, vorzugsweise 60 - 75 %, insbesondere 70 ± 2 %, erzielt wird. Die benötigten Haltezeiten können natürlich je nach Denaturierungstemperatur und dem gewünschten Denaturierungsgrad variieren. Im allgemeinen eignen sich jedoch Haltezeiten im Bereich von 80 - 600 s, insbesondere 200 - 400 s.

Das in dem Teildenaturierungsschritt c) anfallende Homogenisat wird direkt anschließend sprühgetrocknet. Die Zeitspanne zwischen Teildenaturierung und Sprühtrocknung muß dabei möglichst gering gehalten werden. Die Sprühtrocknung kann auf an sich bekannte Weise unter Verwendung von bekannten Sprühtrocknern, bei welchen das zu trocknende Gut in die Trocknungszone zerstäubt wird, erfolgen.

Da die Sprühtrocknung vorteilhaft sofort anschließend an die Teildenaturierung durchgeführt wird, wird das aus der Teildenaturierungszone austretende Gut zweckmäßig direkt in einen Sprühtrockner, z.B. einen Sprühtrocknungsturm, weitergeleitet, dessen Zuleitung zweckmäßig direkt mit dem Auslaß aus der Denaturierungszone gekoppelt ist. In den Sprühtrockner kann die zur Trocknung benötigte Heißluft mit einer Eintrittstemperatur im Bereich von 150 - 180°C eingeführt werden. Um ein schnelles Trocknen zu erzielen, wird die in den Sprühtrocknungsturm einzuführende Menge an Homogenisat zweckmäßig so gesteuert, daß eine Austrittstemperatur von 80 - 85 °C erreicht wird.

Das erfindungsgemäße neuartige teildenaturierte Molkenproteinprodukt kann in allen Bereichen der Nahrungsmittelindustrie als wertvoller Proteinzusatz mit emulgierenden Eigenschaften verwendet werden. Es zeichnet sich durch für die Verarbeitung in Lebensmitteln günstige Eigenschaften, insbesondere für die Verarbeitung in kaltherstellbaren emulgierten Lebensmitteln, wie Mayonnaisen oder Salatsoßen (=Dressings) oder auch Fleischteigen oder Speiseeis günstige Eigenschaften, aus, und ist daher als wertvoller Proteinzusatz zu Lebensmitteln geeignet. Als besonders vorteilhaft erweist sich das neue Produkt als emulgierender und viskositätserhöhender Bestandteil von kaltherstellbaren emulgierten Lebensmitteln, beispielsweise wenn es als Emulgator und Eigelbersatz in Mayonnaisen und Dressings eingesetzt wird. Mayonnaise enthält klassischerweise 4 Hauptbestandteile: Öl, Essig, Wasser und Eigelb. Molkenproteine können in Mayonnaisen und Dressings als Emulgatoren eingesetzt werden, um das Eigelb ganz oder teilweise zu ersetzen. Dabei hat das neue teildenaturierte Molkenproteinprodukt nicht nur eine hervorragende Emulgatorwirkung, sondern zeichnet sich darüber hinaus dadurch aus, daß es - im Gegensatz zu nicht denaturiertem Molkenprotein - die Viskosität des emulgierten Produktes stark erhöht und dessen organoleptischen Eigenschaften vorzüglich beeinflußt und dem Produkt eine ausgesprochen kremige Beschaffenheit mit fettartigem Schmelz verleiht.

Diese die organoleptische Produktgualität fördernden Eigenschaften des neuen teildenaturierten Molkenproteinprodukts sind so stark ausgeprägt, daß in Öl-in-Wasser-Emulsionen wie Mayonnaisen und Dressings, welche das neue teildenaturierte Molkenproteinprodukts als Emulgator enthalten, bis zu 50 % des Ölanteils durch Wasser ersetzt werden können, ohne daß die Konsistenz und/oder die kremige Beschaffenheit und der fettartige Schmelz der Emulsion verlorengehen. Das neue teildenaturierte Molkenprotein ermöglicht es also, fettreduzierte Mayonnaisen und Dressings unter Beibehaltung einer guten Konsistenz und einer guten organoleptischen Qualität zu erhalten.

Es ist überraschend, daß das neue teildenaturierte Molkenproteinprodukt mit einem Denaturierungsgrad von vorzugsweise um 80 % und einem mittleren Teilchendurchmesser im Bereich von vorzugsweise 40 - 50 µm derartig gute organoleptische Eigenschaften hat und frei von sandigem oder griesigem Beigeschmack ist, während denaturierte Molkenproteine mit ähnlichen Teilchengrößen bekanntermaßen wegen ihrer schlechten organoleptischen Eigenschaften, insbesondere ihres sandigen Mundgefühls, als Zusatz zu kalthergestellten Mayonnaisen ungeeignet sind. Gegenüber Eigelb hat das teildenaturierte Molkenprotein auch den Vorteil, daß seine emulgierenden und viskositätserhöhenden Eigenschaften auch bei nachträglicher Erhitzung des Lebensmittels nicht verloren gehen, sondern im Gegenteil noch verstärkt werden.
So eignet sich das teildenaturierte Molkenprotein z.B. auch als viskositätserhöhender Emulgator für aus fein zerkleinertem Fleisch kalthergestellte Teige, welche anschließend erhitzt werden sollen, beispielsweise Brät.

Die nachfolgenden Beispiele sollen die Erfindung näher erläutern.

### Beispiel 1:

Herstellung eines teildenaturierten Molkenproteinproduktes mit einem Denaturierungsgrad von 70 % und einem Gesamtproteingehalt von etwa 82 Gew.-% bezogen auf Trockensubstanz.
A) Als Ausgangsprodukt wurde Molke folgender Zusammensetzung eingesetzt:

| | |
|---|---|
| Trockensubstanz (= TS): | 5 Gew.-% |
| Lactose: | 75 Gew.-% in TS |
| Asche: | 9 Gew.-% in TS |
| Fett: | 1 Gew.-% in TS |
| Gesamtprotein: | 12 Gew.-% in TS |
| NPN-Verbindungen: | 3,5 Gew.-% in TS |
| pH: | 6,3 |

Für die Diafiltration der Molke wurde eine Ultrafiltrationsanlage mit hintereinander geschalteten Plattenmodulen mit Polysulphon-Membranen mit einer Molmassenausschlußgrenze von 20.000 Dalton eingesetzt. Die Molke wurde bei einer Temperatur von 10 - 15°C und einer transmembralen Druckdifferenz von 4 bar zwischen Permeat- und Retentatseite mit einer Strömungsgeschwindigkeit von 20 l/min pro Platte durch die Ultrafiltrationsanlage geleitet, wobei im hinteren Teil der Ultrafiltrationsanlage noch Wasser in einer Menge von etwa 5 % der eingesetzten Molke zugesetzt wurde.
Man erhielt eine Menge an proteinangereichertem konzentriertem Molkenretentat, welche etwa 2,2 % des Volumens der eingesetzten Molke entsprach. Das Molkenretentat hatte die folgende Zusammensetzung:

| | |
|---|---|
| Trockensubstanz: | 30 Gew.-% |
| Lactose: | 4 Gew.-% in TS |
| Asche: | unter 4 Gew.-% in TS |
| Fett: | 7 Gew.-% in TS |
| Geamtprotein: | 82 Gew.-% in TS |
| NPN-Verbindungen: | 6 Gew.-% in TS |
| pH: | 6,2 |

B) 150 kg des erhaltenen konzentrierten Molkenretentates wurden mit 225 kg demineralisiertem Wasser und einer zur Einstellung von pH 7,3 nötigen Menge an verdünnter Natronlauge vermischt. Das erhaltene verdünnte Molkenretentat hatte die folgende Zusammensetzung:

| | |
|---|---|
| Trockensubstanz: | 12 Gew.-% |
| Lactose: | 4 Gew.-% in TS |
| Asche: | unter 4 Gew.-% in TS |
| Fett: | 7 Gew.-% in TS |
| Gesamtprotein: | 82 Gew.-% in TS |
| NPN-Verbindungen: | 6 Gew.-% in TS |

C) Das verdünnte Molkenretentat wurde in einem Durchlauferhitzer vom Typ eines Plattenwärmeaustauschers auf eine Temperatur von 60 - 70°C erhitzt und in einen Zwischentank geleitet, wo es kurze Zeit zur Entlüftung belassen wurde. Dann wurde das entlüftete verdünnte Molkenretentat in die Denaturierungszone geführt, in welcher es im Kreislauf durch eine den Homogenisator (Supraton S 200 Maschine der Firma Dorr-Oliver mit einer 3-Stufen Zahn- und Kammerausrüstung und Injektionseinlässen zur Wasserdampf-Injektion versehen) enthaltende Rohrschleife gepumpt wurde. Gleichzeitig mit dem Molkenretentat wurde der Supraton-Maschine filtrierter Wasserdampf zugeführt. Der Volumenstrom innerhalb der Schleife wurde auf 4.000 l/h bei einem Durchsatz von 60 l/h eingestellt. Die Rotorgeschwindigkeit der Supraton-Maschine betrug 3.500 U/min. Die Denaturierungstemperatur betrug 80°C, und die Verweilzeit unter Denaturierungsbedingungen betrug 300 s.
D) Das aus dem Denaturisierungskreislauf abfließende Homogenisat wurde mit Hilfe einer Hochdruckpumpe direkt in einen Sprühtrocknungsturm (Sprühtrockner der Firma NIRO mit Zentrifugalzerstäuber) weitergeführt. Der Sprühtrocknungsturm wurde mit Heißluft mit einer Eintrittstemperatur von 175°C und einer Austrittstemperatur von 83°C beheizt. Das sprühgetrocknete Molkenproteinprodukt wurde als Pulver mit folgender Zusammensetzung erhalten:

| | |
|---|---|
| Feuchtigkeit: | 5,5 Gew.-% |
| Gesamtprotein: | 78 Gew.-% (= 81,7 Gew.-% bezogen auf TS) |
| Denaturiertes Protein: | 70 Gew.-% bezogen auf Gesamtprotein |
| Lactose: | 4 Gew.-% |
| Asche: | unter 4 Gew.-% |
| Fett: | 7 Gew.-% |
| NPN-Verbindungen: | 6 Gew.-% |

Der pH-Wert einer wässrigen Suspension des Produktes betrug 7,3.

Die Teilchengrößenbestimmung in einer Suspension des Produktes in Ethanol mit einem Laser Scanner (Malvern Series 2600 Particle Size Analyzer) ergab folgende Werte:

Mittlerer Teilchendurchmesser ca. 45 µm, Teilchengrößenverteilung: weniger als 10 % der Teilchen hatten einen Durchmesser von unter 10 µm, und weniger als 10 % der Teilchen hatten einen Durchmesser von über 100 µm.

Die ermittelte Teilchengrößen-Verteilung ist nachfolgend wiedergegeben.

| Obere Größe in µm | Unter % | Obere Größe in µm | Unter % | Obere Größe in µm | Unter % | Obere Größe in µm | Unter % | Obere Größe in µm | Unter % | Obere Größe in µm | Unter % |
|---|---|---|---|---|---|---|---|---|---|---|---|
| 564 | 100 | 254 | 99,7 | 114 | 96,7 | 51,3 | 66,7 | 23,1 | 25,9 | 10,4 | 5,1 |
| 524 | 100 | 236 | 99,6 | 106 | 95,5 | 47,7 | 62,7 | 21,4 | 22,8 | 9,64 | 4,1 |
| 488 | 100 | 219 | 99,5 | 98,6 | 94,0 | 44,4 | 58,8 | 19,9 | 19,9 | 8,97 | 3,3 |
| 454 | 100 | 204 | 99,4 | 91,7 | 92,2 | 41,2 | 54,9 | 18,5 | 17,2 | 8,34 | 2,6 |
| 422 | 99,9 | 190 | 99,3 | 85,3 | 90,0 | 38,4 | 51,0 | 17,2 | 14,9 | 7,76 | 2,0 |
| 392 | 99,9 | 176 | 99,1 | 79,3 | 87,6 | 35,7 | 47,1 | 16,0 | 13,0 | 7,21 | 1,5 |
| 365 | 99,9 | 164 | 99,0 | 73,8 | 84,8 | 33,2 | 43,3 | 14,9 | 11,3 | 6,71 | 1,1 |
| 339 | 99,9 | 153 | 98,8 | 68,6 | 81,7 | 30,8 | 39,5 | 13,9 | 9,8 | 6,24 | 0,9 |
| 315 | 99,8 | 142 | 98,5 | 63,8 | 78,3 | 28,7 | 36,0 | 12,9 | 8,5 | 5,80 | 0,6 |
| 293 | 99,8 | 132 | 98,1 | 59,3 | 74,6 | 26,7 | 32,5 | 12,0 | 7,3 | | |
| 273 | 99,7 | 123 | 97,5 | 55,2 | 70,7 | 24,8 | 29,2 | 11,2 | 6,2 | | |

### Beispiel 2:

Herstellung eines teildenaturierten Molkenproteinproduktes mit einem Denaturierungsgrad von 70 % und einem Gesamtproteingehalt von etwa 70 Gew.-% bezogen auf Trockensubstanz.
A) Als Ausgangsprodukt wurde Molke folgender Zusammensetzung eingesetzt:

| | |
|---|---|
| Trockensubstanz (= TS): | 5 Gew.-% |
| Lactose: | 75 Gew.-% in TS |
| Asche: | 9 Gew.-% in TS |
| Fett: | 1 Gew.-% in TS |
| Gesamtprotein: | 12 Gew.-% in TS |
| NPN-Verbindungen: | 3,5 Gew.-% in TS |
| pH: | 6,3 |

Für die Ultrafiltration der Molke wurde eine Ultrafiltrationsanlage mit hintereinander geschalteten Plattenmodulen mit Polysulphon-Membranen mit einer Molmassenausschlußgrenze von 20.000 Dalton eingesetzt. Die Molke wurde bei einer Temperatur von 10 bis 15 °C und einer transmembralen Druckdifferenz von 4 bar zwischen Permeat- und Retentatseite mit einer Strömungsgeschwindigkeit von 20 l/min pro Platte durch die Ultrafiltrationsanlage geleitet.
Man erhielt eine Menge an proteinangereichertem konzentriertem Molkenretentat, welche etwa 2,5 % des Volumens der eingesetzten Molke entsprach. Das Molkenretentat hatte die folgende Zusammensetzung:

| | |
|---|---|
| Trockensubstanz: | 30 Gew.-% |
| Lactose: | 16 Gew.-% in TS |
| Asche: | unter 5 Gew.-% in TS |
| Fett: | 6 Gew.-% in TS |
| Gesamtprotein: | 70 Gew.-% in TS |
| NPN-Verbindungen: | 6 Gew.-% in TS |
| pH: | 6,2 |

B) 150 kg des erhaltenen konzentrierten Molkenretentates wurden mit 170 kg demineralisiertem Wasser und einer zur Einstellung von pH 7,3 nötigen Menge an verdünnter Natronlauge vermischt. Das erhaltene verdünnte Molkenretentat hatte die folgende Zusammensetzung:

| | |
|---|---|
| Trockensubstanz: | 14 Gew.-% |
| Lactose: | 16 Gew.-% in TS |
| Asche: | unter 5 Gew.-% in TS |
| Fett: | 6 Gew.-% in TS |
| Gesamtprotein: | 70 Gew.-% in TS |
| NPN-Verbindungen: | 6 Gew.-% in TS |

C) Das verdünnte Molkenretentat wurde in einem Durchlauferhitzer vom Typ eines Plattenwärmeaustauschers auf eine Temperatur von 60 - 70 °C erhitzt und in einen Zwischentank geleitet, wo es kurze Zeit zur Entlüftung belassen wurde. Dann wurde das entlüftete verdünnte Molkenretentat in die Denaturierungszone geführt, in welcher es im Kreislauf durch eine den Homogenisator (Supraton S 200 Maschine der Firma Dorr-Oliver mit einer 3-Stufen Zahn-und Kammerausrüstung und Injektionseinlässen zur Wasserdampf-Injektion versehen) enthaltende Rohrschleife gepumpt wurde. Gleichzeitig mit dem Molkenretentat wurde der Supraton-Maschine filtrierter Wasserdampf zugeführt. Der Volumenstrom innerhalb der Schleife wurde auf 4.000 l/h bei einem Durchsatz von 60 l/h eingestellt. Die Rotorgeschwindigkeit der Supraton-Maschine betrug 3.500 U/min. Die Denaturierungstemperatur betrug 80 °C, und die Verweilzeit unter Denaturierungsbedingungen betrug 300 s.
D) Das aus dem Denaturisierungskreislauf abfließende Homogenisat wurde mit Hilfe einer Hochdruckpumpe direkt in einen Sprühtrocknungsturm (Sprühtrockner der Firma NIRO mit Zentrifugalzerstäuber) weitergeführt. Der Sprühtrocknungsturm wurde mit Heißluft mit einer Eintrittstemperatur von 175 °C und einer Austrittstemperatur von 83 °C beheizt. Das sprühgetrocknete Molkenproteinprodukt wurde als Pulver mit folgender Zusammensetzung enthalten:

| | |
|---|---|
| Feuchtigkeit: | 5,5 Gew.-% |
| Gesamtprotein: | 67 Gew.-% (= 70,2 Gew.-% bezogen auf TS) |
| Denaturiertes Protein: | 70 Gew.-% bezogen auf Gesamtprotein |
| Lactose: | 15 Gew.-% |
| Asche: | unter 5 Gew.-% |
| Fett: | 6 Gew.-% |
| NPN-Verbindungen: | 6 Gew.-% |

Der pH-Wert einer wässrigen Suspension des Produktes betrug 7,3.

Die Teilchengrößenbestimmung in einer Suspension des Produktes in Ethanol mit einem Laser Scanner (Malvern Series 2600 Particle Size Analyzer) ergab folgende Werte:

Mittlerer Teilchendurchmesser ca. 45 µm, Teilchengrößenverteilung: weniger als 10 % der Teilchen hatten einen Durchmesser von unter 10 µm, und weniger als 10 % der Teilchen hatten einen Durchmesser von über 100 µm.

### Beispiel 3:

Herstellung eines teildenaturierten Molkenproteinproduktes mit einem Denaturierungsgrad von 70 % und einem Gesamtproteingehalt von etwa 65 Gew.-% bezogen auf Trockensubstanz.
A) Als Ausgangsprodukt wurde Molke folgender Zusammensetzung eingesetzt:

| | |
|---|---|
| Trockensubstanz (= TS): | 5 Gew.-% |
| Lactose: | 75 Gew.-% in TS |
| Asche: | 9 Gew.-% in TS |
| Fett: | 1 Gew.-% in TS |
| Gesamtprotein: | 12 Gew.-% in TS |
| NPN-Verbindungen: | 3,5 Gew.-% in TS |
| pH: | 6,3 |

Für die Ultrafiltration der Molke wurde eine Ultrafiltrationsanlage mit hintereinander geschalteten Plattenmodulen mit Polysulphon-Membranen mit einer Molmassenausschlußgrenze von 20.000 Dalton eingesetzt. Die Molke wurde bei einer Temperatur von 10 bis 15 °C und einer transmembralen Druckdifferenz von 4 bar zwischen Permeat- und Retentatseite mit einer Strömungsgeschwindigkeit von 20 l/min pro Platte durch die Ultrafiltrationsanlage geleitet.
Man erhielt eine Menge an proteinangereichertem konzentriertem Molkenretentat, welche etwa 2,6 % des Volumens der eingesetzten Molke entsprach. Das Molkenretentat hatte die folgende Zusammensetzung:

| | |
|---|---|
| Trockensubstanz: | 30 Gew.-% |
| Lactose: | 20 Gew.-% in TS |
| Asche: | unter 5 Gew.-% in TS |
| Fett: | 6 Gew.-% in TS |
| Gesamtprotein: | 65 Gew.-% in TS |
| NPN-Verbindungen: | 6 Gew.-% in TS |
| pH: | 6,2 |

B) 150 kg des erhaltenen konzentrierten Molkenretentates wurden mit 170 kg demineralisiertem Wasser und einer zur Einstellung von pH 7,3 nötigen Menge an verdünnter Natronlauge vermischt. Das erhaltene verdünnte Molkenretentat hatte die folgende Zusammenstzung:

| | |
|---|---|
| Trockensubstanz: | 14 Gew.-% |
| Lactose: | 20 Gew.-% in TS |
| Asche: | unter 5 Gew.-% in TS |
| Fett: | 6 Gew.-% in TS |
| Gesamtprotein: | 65 Gew.-% in TS |
| NPN-Verbindungen: | 6 Gew.-% in TS |

C) Das verdünnte Molkenretentat wurde in einem Durchlauferhitzer vom Typ eines Plattenwärmeaustauschers auf eine Temperatur von 60 - 70 °C erhitzt und in einen Zwischentank geleitet, wo es kurze Zeit zur Entlüftung belassen wurde. Dann wurde das entlüftete verdünnte Molkenretentat in die Denaturierungszone geführt, in welcher es im Kreislauf durch eine den Homogenisator (Supraton S 200 Maschine der Firma Dorr-Oliver mit einer 3-Stufen Zahn- und und Kammerausrüstung und Injektionseinlässen zur Wasserdampf-Injektion versehen) enthaltende Rohrschleife gepumpt wurde. Gleichzeitig mit dem Molkenretentat wurde der Supraton-Maschine filtrierter Wasserdampf zugeführt. Der Volumenstrom innerhalb der Schleife wurde auf 4.000 l/h bei einem Durchsatz von 60 l/h eingestellt. Die Rotorgeschwindigkeit der Supraton-Maschine betrug 3.500 U/min. Die Denaturierungstemperatur betrug 80 °C, und die Verweilzeit unter Denaturierungsbedingungen betrug 300 s.
D) Das aus dem Denaturisierungskreislauf abfließende Homogenisat wurde mit Hilfe einer Hochdruckpumpe direkt in einen Sprühtrocknungsturm (Sprühtrockner der Firma NIRO mit Zentrifugalzerstäuber) weitergeführt. Der Sprühtrocknungsturm wurde mit Heißluft mit einer Eintrittstemperatur von 175 °C und einer Austrittstemperatur von 83 °C beheizt. Das sprühgetrocknete Molkenproteinprodukt wurde als Pulver mit folgender Zusammensetzung erhalten:

| | |
|---|---|
| Feuchtigkeit: | 5,5 Gew.-% |
| Gesamtprotein: | 62 Gew.-% (= 64,9 Gew.-% bezogen auf TS) |
| Denaturiertes Protein: | 70 Gew.-% bezogen auf Gesamtprotein |
| Lactose: | 19 Gew.-% |
| Asche: | unter 5 Gew.-% |
| Fett: | 6 Gew.-% |
| NPN-Verbindungen: | 6 Gew.-% |

Der pH-Wert einer wässrigen Suspension des Produktes betrug 7,3.

Die Teilchengrößenbestimmung in einer Suspension des Produktes in Ethanol mit einem Laser Scanner (Malvern Series 2600 Particle Size Analyzer) ergab folgende Werte:

Mittlerer Teilchendurchmesser ca. 45 µm, Teilchengrößenverteilung: weniger als 10 % der Teilchen hatten einen Durchmesser von unter 10 µm, und weniger als 10 % der Teilchen hatten einen Durchmesser von über 100µm.

### Beispiel 4:

Verwendung des teildenaturierten Molkenproteinproduktes des Beispiels 1 als Emulgator in kaltherstellbarer Mayonnaise.

Es wurde eine Mayonnaise unter Verwendung des teildenaturierten Molkenproteinprodukts des Beispiels 1 als Emulgator hergestellt und mit zwei Vergleichsmayonnaisen verglichen. Als Vergleichsmayonaisen wurden eine Standardmayonnaise mit Eigelb als Emulgator und eine Vergleichsmayonnaise mit nativem nicht denaturiertem Molkenproteinkonzentrat als Emulgator hergestellt. Die Zusammensetzung und die Eigenschaften der erhaltenen Mayonnaisen sind in der nachfolgenden Tabelle 1 zusammengestellt.

**Tabelle 1**

| Mayonnaisen | | | |
|---|---|---|---|
| Zusammensetzung in Gew.-% | Erfindungsgemäße Mayon. mit teildenat.Molkenproproteinprodukt | Vergleichsmayon. A Standard-Mayon. mit Eigelb | Vergleichsmayon. B mit nicht denat. Molkenproteinkonzentrat |
| Phase 1a | | | |
| -Wasser | 35,40 | 35,40 | 35,40 |
| -Salz | 0,50 | 0,50 | 0,50 |
| -Variolac 83R* | 5,00 | 5,00 | 5,00 |

| Phase 1B | | | |
|---|---|---|---|
| -teildenat.Molkenproteinprodukt | 1,00 | - | - |
| -Eigelb | - | 3,00 | - |
| -nicht denat.Molkenproteinkonzentrat | - | - | 1,00 |
| -Xanthen-Gummi | 0,10 | 0,10 | 0,10 |
| -Ultratex 4 R ** | 1,00 | 1,00 | 1,00 |

| Phase 2 | | | |
|---|---|---|---|
| -Öl | 50,00 | 50,00 | 50,00 |

| Phase 3 | | | |
|---|---|---|---|
| -Senf | 2,50 | 2,50 | 2,50 |
| -Gewürzessig | 4,50 | 4,50 | 4,50 |

| Eigenschaften | | | |
|---|---|---|---|
| -Viskosität | 19.000 cP | 5.000 cP | 7.000 cP |
| -Geschmacksgefühl | sehr dickflüssig, kremig, guter Schmelz | dünnflüssig, kremig, guter Schmelz | dünnflüssig, guter Schmelz |
| | wie hochviskose Mayonnaise | wie relativ viskoses Dressing | wie dünnflüssige Mayonnaise |

| | | | |
|---|---|---|---|
| * Variolac 83^{R} = sprühgetrocknetes Molkenpermeat mit 83 Gew.-% Lactose, Hersteller Danmark Protein A/S | | | |
| ** Ultratex 4^{R} = modifizierte Stärke, Hersteller National Starch Corp. | | | |

Die Mayonnaisen wurden wie folgt hergestellt.

Die Phase 1a wurde in ein Emulgiergerät (Emulgiergerät der Fa. Koruma, Typ DH-V 60/10) gegeben. Dann wurde die Phase 1b mit etwas Öl vermischt und zu der Phase 1a gegeben. Das Gemisch wurde homogenisiert, bis eine optimale Viskosität erreicht wurde. Hierzu wurde 0,5 min bei voller Geschwindigkeit und 1 min bei 80 % Geschwindigkeit des Gerätes homogenisiert. Dann wurde die Phase 2 in die Phase 1 emulgiert, Emulgierzeit etwa 1 min, und anschließend wurde die Phase 3 zugegeben.

Die mit dem teildenaturierten Molkenproteinprodukt als Emulgator hergestellte Mayonnaise hatte eine gute kremige und dickflüssige Konsistenz mit gutem Schmelz und erzeugte ein angenehmes fettartiges Gefühl im Mund. Die Viskosität der Mayonnaise war gegenüber der der Standardmayonnaise wesentlich erhöht.

Aufgrund der die Viskosität erhöhenden und der Mayonnaise eine kremige Beschaffenheit mit gutem Schmelz verleihenden Eigenschaften der erfindungsgemäßen teildenaturierten Molkenproteinprodukte wird es möglich, in mit dem erfindinngsgemäßen Produkt emulgierten Mayonnaisen einen erheblichen Teil des in Mayonnaisen üblicherweise enthaltenen Fettes durch Wasser zu ersetzen.

Normales nicht-denaturiertes Molkenproteinkonzentrat führte dagegen kaum zu einer Erhöhung der Viskosität und der damit hergestellten Mayonnaise fehlte die erwünschte kremige Beschaffenheit. Dieses nicht-denaturierte Molkenproteinkonzentrat ist deshalb ungeeignet als Fettimitator in kalthergestellten Emulsionen.

### Beispiel 5:

Verwendung des teildenaturierten Molkenproteins des Beispiels 1 in einem kalthergestellten fettreduzierten Dressing (Salatsoße).

Es wurde ein das teildenaturierte Molkenproteinprodukt des Beispiels 1 enthaltendes Dressing hergestellt und mit zwei Vergleichsdressings verglichen. Als Vergleichsdressings wurden ein Standarddressing mit normalem Fettgehalt und ein fettreduziertes Vergleichsdressing ohne das teildenaturierte Molkenproteinprodukt hergestellt. Die Zusammensetzung der Dressings und ihre Eigenschaften sind in der nachstehenden Tabelle 2 aufgeführt.

**Tabelle 2**

| Dressings (Salatsoßen) | | | |
|---|---|---|---|
| Zusammensetzung in Gew.-% | Erfindungsgemäßes Dressing, fettreduziert, mit teildenat.Molkenprodukt | Vergleichsdressing A Standarddressing normaler Fettgehalt | Vergleichsdressing B fettreduziert |
| Phase 1a | | | |
| -Wasser | 43,62 | 29,62 | 43,62 |
| -Zucker | 9,00 | 9,00 | 9,00 |
| -Salz | 0,50 | 0,50 | 0,50 |
| -Gewürzextrakt | 0,18 | 0,18 | 0,18 |
| -Zwiebelpulver | 1,50 | 1,50 | 1,50 |

| Phase 1b | | | |
|---|---|---|---|
| -Eigelb | 3,00 | 3,00 | 3,00 |
| -teildenat.Molkenproteinprodukt | 1,00 | - | - |
| -Xanthen-Gummi | 0,10 | 0,10 | 0,10 |
| -Guar-Gummi | 0,10 | 0,10 | 0,10 |

| Phase 2 | | | |
|---|---|---|---|
| -Öl | 15,00 | 30,00 | 15,00 |

| Phase 3 | | | |
|---|---|---|---|
| -Gewürzessig 10 %ig | 6,00 | 6,00 | 6,00 |
| -Gurke | 10,00 | 10,00 | 10,00 |
| -Tomatenpaste | 10,00 | 10,00 | 10,00 |
| -Senf | 2,00 | 2,00 | 2,00 |

| Eigenschaften; | | | |
|---|---|---|---|
| -Viskosität | 2.200 cP | 2.300 cP | 670 cP |
| -Geschmacksgefühl | gut, kremig | gut, kremig | wässrig dünn |

Die Herstellung erfolgte in dem in Beispiel 4 für die Mayonnaisen-Herstellung beschriebenen Emulgiergerät nach der in Beispiel 4 beschriebenen Methode.

Wie die in Tabelle 2 angegebenen Ergebnisse zeigen, konnte in dem Dressing bei Zusatz von nur 1 Gew.-% des teildenaturierten Molkenproteinprodukts die Hälfte des Fettes durch Wasser ersetzt werden, ohne daß ein Qualitätsverlust auftrat.

Eine Reduktion des Fettgehaltes ohne Zusatz von teildenaturiertem Molkenproteinprodukt führte dagegen zu einem starken Qualitätsverlust und ergab statt eines gewünschten kremigen Dressings ein dünnes wässriges Produkt.

## Patentansprüche

1. Teildenaturiertes Molkenproteinprodukt mit einem Proteingehalt von 65 - 95 Gew.-% Protein bezogen auf Trockensubstanz, einem Denaturierungsgrad des Proteins von 55 - 80 % und mit einem mittleren Teilchendurchmesser im Bereich von 30 -60, insbesondere 40 - 50 µm welches suspendiert in Wasser einen pH-Wert im Bereich zwischen >7,0 und 8,0 aufweist.

2. Teildenaturiertes Molkenproteinprodukt gemäß Anspruch 1 mit einer Teilchengrößenverteilung, bei der mindestens 50 % der Teilchen einen Teilchendurcbmesser im Bereich von 20 - 70 µm besitzen, wobei weniger als 10 % der Teilchen Teilchendurchmesser von unter 10 µm und weniger als 1 % der Teilchen Teilchendurchmesser von unter 5 µm besitzen und weniger als 10 % der Teilchen Teilchendurchmesser von über 100 µm und weniger als 1 % der Teilchen Teilchendurchmesser von über 200 µm besitzen.

3. Teildenaturiertes Molkenproteinprodukt gemäß einem der vorstehenden Ansprüche mit einem Proteingehalt von 70 - 95, insbsondere 75 - 85, Gew.-% bezogen auf Trockensubstanz.

4. Teildenaturiertes Molkenproteinprodukt gemäß einem der vorstehenden Ansprüche mit einem Fettgehalt von 5 - 8 Gew.-% bezogen auf Trockensubstanz.

5. Teildenaturiertes Molkenproteinprodukt gemäß einem der vorstehenden Ansprüche in Pulverform mit einem Wassergehalt von höchstens 6 Gew.-%.

6. Teildenaturiertes Molkenproteinprodukt gemäß einem der vorstehenden Ansprüche, welches in Wasser suspendiert einen pH-Wert im Bereich zwischen > 7,0 und 7,5 aufweist.

7. Teildenaturiertes Molkenproteinprodukt gemäß einem der vorstehenden Ansprüche mit einem Denaturierungsgrad des Proteins von 60 - 75 %.

8. Teildenaturiertes Molkenprotein gemäß Anspruch 4 mit einem Lactosegehalt von 3 - 6 Gew.-% bezogen auf Trockensubstanz.

9. Verfahren zur Herstellung eines teildenaturierten Molkenproteinprodukts mit einem Proteingehalt von 65 - 95, insbesondere 70 - 95, Gew.-% bezogen auf Trockensubstanz, einem Denaturierungsgrad des Proteins von 55 - 80 % und mit einem mittleren Teilchendurchmesser von 30 - 60, insbesondere 40 - 50µm, dadurch gekennzeichnet, daß man
a) aus Molke ein proteinangereichertes, lactoseabgereichertes, auf einen Trockensubstanzgehalt von 25 - 35 Gew.-% konzentriertes Molkenretentat mit einem auf 65 - 95, insbesondere 70 - 95, Gew.-% bezogen auf Trockensubstanz angereicherten Gehalt an Protein und einem auf < 20 Gew.-% bezogen auf Trockensubstanz abgereicherten Gehalt an Lactose abtrennt,
b) das erhaltene proteinangereicherte konzentrierte Molkenretentat durch Zugabe von Wasser und verdünnter Lauge in ein verdünntes Molkenretentat mit einem Trockensubstanzgehalt von 10 - 20 Gew.-% und einem pH-Wert im Bereich zwischen > 7,0 und 8,0 überführt,
c) das erhaltene verdünnte Molkenretentat auf eine unter dem Koagulationspunkt der Molkenproteine liegende Temperatur von mindestens 50°C vorerhitzt und dann durch einen Homogenisator leitet und darin während einer für die Denaturierung von 55 - 80 % des Proteingehaltes ausreichenden Verweilzeit einer durch gleichzeitiges Einleiten von Wasserdampf erzeugten denaturierenden Temperatur unter gleichzeitiger Homogenisierung aussetzt und
d) das im Verfahrensschritt c) erhaltene Homogenisat direkt anschließend einer Sprühtrocknung unterwirft.

10. Verwendung eines teildenaturierten Molkenproteinprodukts gemäß Anspruch 1 als emulgierender und viskositätserhöhender Zusatzstoff in kaltherstellbaren Lebensmittelemulsionen, insbesondere Mayonnaisen, Dressings und Fleischteigen.

## Claims

1. Partially denatured whey protein product having a protein content of 65 - 95% by weight of protein, based on dry matter, a degree of denaturation of the protein of 55 - 80% and having a mean particle diameter in the range 30 - 60, in particular 40 - 50 µm, which, when suspended in water, shows a pH value in the range between > 7.0 and 8.0.

2. Partially denatured whey protein product according to Claim 1, having a particle size distribution in which at least 50% of the particles possess a particle diameter in the range 20 - 70 µm, less than 10% of the particles possessing particle diameters below 10 µm and less than 1% of the particles possessing particle diameters below 5 µm and less than 10% of the particles possessing particle diameters above 100 µm and less than 1% of the particles possessing particle diameters of above 200 µm.

3. Partially denatured whey protein product according to one of the preceding claims, having a protein content of 70 - 95, in particular 75 - 85, % by weight, based on dry matter.

4. Partially denatured whey protein product according to one of the preceding claims, having a fat content of 5 - 8% by weight, based on dry matter.

5. Partially denatured whey protein product according to one of the preceding claims, in powder form having a water content of at most 6% by weight.

6. Partially denatured whey protein product according to one of the preceding claims, which, suspended in water, shows a pH value in the range between > 7.0 and 7.5.

7. Partially denatured whey protein product according to one of the preceding claims, having a degree of denaturation of the protein of 60 - 75%.

8. Partially denatured whey protein according to Claim 4, having a lactose content of 3 - 6% by weight, based on dry matter.

9. Process for the production of a partially denatured whey protein product having a protein content of 65 - 95, in particular 70 - 95, % by weight, based on dry matter, a degree of denaturation of the protein of 55 - 80% and having a mean particle diameter of 30 - 60, in particular 40 - 50, µm, characterised in that
a) from whey a protein-enriched, lactose-depleted whey retentate which is concentrated to a dry matter content of 25 - 35% by weight and has a protein content enriched to 65 - 95, in particular 70 - 95, % by weight, based on dry matter, and a lactose content depleted to < 20% by weight, based on dry matter, is separated off,
b) the protein-enriched concentrated whey retentate obtained is converted by addition of water and dilute alkali into a dilute whey retentate having a dry matter content of 10 - 20% by weight and a pH value in the range between > 7.0 and 8.0,
c) the dilute whey retentate obtained is preheated to a temperature of at least 50°C, lying below the coagulation point of the whey proteins, and is then passed through a homogeniser and is therein exposed to a denaturing temperature generated by simultaneous introduction of steam, with simultaneous homogenisation, during a residence time sufficient for the denaturation of 55 - 80% of the protein content and
d) the homogenate obtained in process step c) is immediately afterwards subjected to spray-drying.

10. Use of a partially denatured whey protein product according to Claim 1 as an emulsifying and viscosity-increasing additive in cold-producible food emulsions, in particular mayonnaises, dressings and meat pastes.

## Revendications

1. Produit partiellement dénaturés à base de protéines de petit-lait, avec une teneur en protéines de 65 % à 95 % en poids, rapportée à la substance sèche, un degré de dénaturation des protéines de 55 % à 80 % et un diamètre moyen de particules situé dans la gamme de 30 à 60 et, en particulier, de 40 à 50 µm, qui présente, en suspension dans l'eau, une valeur de pH telle que 7,0 < pH ≦ 8,0.

2. Produit partiellement dénaturé à base de protéines de petit-lait, selon la revendication 1, avec une distribution de la taille de particules dans laquelle au moins 50 % des particules ont un diamètre de particules situé dans l'intervalle de 20 µm à 70 µm avec moins de 10 % des particules ayant un diamètre de particules inférieur à 10 µm et moins de 1 % des particules ayant un diamètre de particules inférieur à 5 µm et moins de 10 % des particules ayant un diamètre de particules supérieur à 100 µm et moins de 1 % des particules ayant un diamètre de particules supérieur à 200 µm.

3. Produit partiellement dénaturé à base de protéines de petit-lait, selon l'une des revendications précédentes, avec une teneur en protéines de 70-95 % et, en particulier, de 75 % à 85 % en poids, rapportée à la substance sèche.

4. Produit partielle dénaturé à base de protéines de petit-lait, selon l'une des revendications précédentes, avec une teneur en matières grasses de 5 % à 8 % en poids, rapportée à la substance sèche.

5. Produit partiellement dénaturé à base de protéines de petit-lait, selon l'une des revendications précédentes, sous forme de poudre avec une teneur en eau de 6 % en poids au maximum.

6. Produit partiellement dénaturé à base de protéines de petit-lait, selon l'une des revendications précédentes, qui présente en suspension dans l'eau, une valeur de pH telle que 7,0 < pH ≦ 7,5.

7. Produit partiellement dénaturé à base de protéines de petit-lait, selon l'une des revendications précédentes, avec un degré de dénaturation des protéines compris entre 60 % et 75 %.

8. Produit partiellement dénaturé à base de protéines de petit-lait, selon la revendication 4, avec une teneur en lactose de 3 % à 6 % en poids, rapportée à la substance sèche.

9. Procédé de préparation d'un produit partiellement dénaturé à base de protéines de petit-lait, avec une teneur en protéines de 65 % à 95 %, et en particulier de 70 % à 95 % en poids, rapportée à la substance sèche, un degré de dénaturation des protéines de 55 % à 80 % et un diamètre moyen de particules de 30 µm à 60 µm et, en particulier, de 40 µm à 50 µm, caractérisé en ce qu'il comprend les étapes consistant à :
a) séparer du petit-lait, un rétentat de petit-lait enrichi en protéines, appauvri en lactose, concentré, avec une teneur en matières sèches de 25 % à 35 % en poids, avec une teneur en protéines comprise entre 65 % et 95 % et, en particulier entre 70 % et 95 % en poids, rapporté à la substance sèche, et une teneur en lactose réduite à moins de 20 % en poids, rapportée à la substance sèche,
b) transformer le rétentat de petit-lait, concentré et enrichi en protéines, par addition d'eau et d'une solution diluée, en un rétentat de petit-lait dilué ayant une teneur en matières sèches de 10 % à 20 % en poids et une valeur de pH telle que 7,0 < pH ≦ 8,0,
c) préchauffer le rétentat de petit-lait dilué ainsi obtenus à une température d'au moins 50°C et inférieure au point de coagulation des protéines du petit-lait, qu'on introduit ensuite dans un homogénéisateur et qu'on soumet dans ce dernier, pendant un temps de séjour suffisant pour la dénaturation de 55 % à 80 % de la teneur en protéines, à une température de dénaturation obtenue par introduction simultanée de vapeur d'eau et avec homogénéisation simultanée, et
d) soumettre le produit homogénéisé obtenu à l'étape du procédé c) et immédiatement après celle-ci, à un séchage par pulvérisation.

10. Utilisation d'un produit partiellement dénaturé des protéines du petit-lait selon la revendication 1, comme additif émulsifiant et augmentant la viscosité dans les émulsions alimentaires, préparables a froid et, en particulier, mayonnaises, les sauces et les pâtés de viande.
